Europäisches Patentamt

European Patent Office

Office européen des brevets

(19)

(11) Publication number: **0 023 133**
**B1**

(12) **EUROPEAN PATENT SPECIFICATION**

(45) Date of publication of patent specification: **16.02.83**

(51) Int. Cl.³: **F 16 K 27/02, F 16 K 1/226**

(21) Application number: **80302412.4**

(22) Date of filing: **17.07.80**

(54) **Plastics butterfly valve.**

(30) Priority: **19.07.79 US 58785**

(43) Date of publication of application:
**28.01.81 Bulletin 81/4**

(45) Publication of the grant of the patent:
**16.02.83 Bulletin 83/7**

(84) Designated Contracting States:
**BE DE FR GB IT NL**

(56) References cited:
**AU - A - 58 630**
**FR - A - 2 079 571**
**FR - A - 2 117 959**
**GB - A - 955 194**
**US - A - 3 051 435**
**US - A - 3 647 180**
**US - A - 4 038 358**

(73) Proprietor: **KEROTEST MANUFACTURING CORPORATION**
**2525 Liberty Avenue**
**Pittsburgh Pennsylvania 15222 (US)**

(72) Inventor: **Schmitt, Edward L.**
**319 Hoffman Road**
**Pittsburgh, PA 15212 (US)**
Inventor: **Bolam, Charles W.**
**965 Margaretta Avenue**
**Pittsburgh, PA 15234 (US)**
Inventor: **Caroleo, Steven J.**
**315 Spartan Drive**
**McKess Rocks, PA 15136 (US)**
Inventor: **Conley, Richard W.**
**342 Ashton Avenue**
**Pittsburgh, PA 15207 (US)**

(74) Representative: **Topps, Ronald et al,**
**D. Young & Co 10 Staple Inn**
**London WC1V 7RD (GB)**

Courier Press, Leamington Spa, England.

## Plastics butterfly valve

This invention relates to a valve assembly and more particularly to a butterfly-type valve having a plastics body portion provided with a valve seat arranged to be contacted by a rotatable valve disc movable into and out of sealing engagement therewith to close and open the valve assembly.

Butterfly valves are well known in the art and conventionally include a valve housing or body portion within which an annular elastomeric seat is mounted for the purpose of effecting a resilient seal against a pivotal valve disc. The disc is rotatable from an open position in which it is aligned with the direction of fluid flow through the valve, to a closed position in which it is at right angles to the direction of flow. In the closed position, the peripheral edge of the disc tightly engages the valve seat to effect a seal. In the conventional butterfly valve, the valve seat is moulded of an elastomeric material to provide it with a limited degree of resilience. When the valve disc is rotated to a closed position, it abuts the valve seat with an interference fit to effect a fluid tight seal between the valve disc and the valve seat.

The need for a certain degree of resilience, and thus displaceability of the valve seat necessitates the use of an elastomeric material. Materials of this type have a tendency to creep or migrate when subjected to high pressure, particularly when the pressure is applied to the seat on one side of the disc without a corresponding supporting pressure on the other side of the disc. The need to control this migration or creep without sacrifice of the necessary resilience of the elastomeric material has caused the industry to adopt the use of reinforcing members in the seat. These reinforcing members are rigid and provide support for the elastomeric valve seat limiting its ability to creep or migrate.

One arrangement for reinforcing the elastomeric valve seat is an annular ring or band of rigid material embedded within the seat as the seat is moulded. It is important that this reinforcement be accurately positioned within the seat if the seat is to have uniformity of strength and accurate control of deflection, migration, and creep is to be maintained. During the process of moulding the valve seat, the elastomeric material is injected into the mould at high pressures. This tends not only to deflect but also to displace the reinforcement member and thus mislocate it within the seat. This results in a defective seat.

US—A—3,537,683 attempts to resolve this problem by modifying a conventional mould for a valve seat by the addition of lateral pins. With this arrangement openings are provided in the valve seat which extend from the outer periphery of the valve seat through the reinforcement member. However, this arrangement is known to result in leakage under certain circumstances requiring that the openings be plugged to prevent leakage. Even if plugging is not effective, an opening is created through the reinforcement member thus permitting differential deflection of the seat at the hole because the plug cannot provide the same uniformity of support as would a continuous, uninterrupted reinforcement member.

An example of another approach to solving the problem of reinforcing the valve seat to prevent creeping is disclosed in US—A—3,595,523. There a rubber valve seat is backed up by a plastic retaining ring which is mounted to the plastic housing by screws. Moulded reinforcement members for conduits are also known. In US—A—3,526,387 a T-connection for a piping system is disclosed and includes an annular body portion and a pair of coaxially aligned tubular branches. The body portions are fabricated of plastic material, and a metallic sleeve is moulded within each tubular branch when the valve body portions are formed to reinforce the branch.

All US—A—3,241,806; 3,502,299; 3,589,678; 3,647,180; 3,667,726; 3,771,764; 4,006,882; 4,025,050 and 4,036,468 disclose butterfly valves having metallic body portions with composite valve seats formed of various materials, i.e., metallic and nonmetallic.

It is also known in the art to provide a metallic butterfly valve with a metallic ring secured to the metallic valve housing with a resilient liner retained within the metallic ring. In US—A—2,923,524 the retaining ring is formed by a plurality of arcuate segments. In US—A—3,473,784 a Teflon liner is supported in the valve housing by a steel ring. In US—A—3,525,499 a stainless steel ring is fused to the metal valve body by casting. US—A—3,612,483 discloses a rigid metal Stellite seat bonded to a valve body.

In US—A—3,940,108 a reinforcement ring is disclosed for a butterfly valve having a metallic body portion. The valve seat is a moulded member formed by an annular, rigid reinforcement ring embedded in a body of moulded elastomeric material. Support projections are provided on the reinforcement ring to support the ring accuately in place within a mould while the elastomeric material is injected into the mould and surrounding the ring.

Still further butterfly valves are disclosed and described in the following US—A—3,311,128; 3,447,780; 3,633,872; 3,675,888; 3,782,684; and 3,790,130.

While it has been suggested to provide reinforcing members for the elastomeric seat ring for a butterfly valve, the known arrangements have been considered ineffective to develop a seal directly on a valve body formed of polyethylene. Therefore, there is need for a butterfly valve fabricated of a plastics material in which a fluid tight seal is maintained between the valve body and the valve closure member and is not subject to creeping of the polyethylene valve body from the valve closure member producing a radial gap around the closure member resulting in leakage of the butterfly valve when the valve closure member is moved to a closed position.

GB—A—955 194 discloses a rotary plug valve having a body formed of plastics material and having sealing packing rings embedded in the plastics material.

According to the present invention there is provided a valve assembly comprising, a valve body formed of plastics material, said valve body having a conduit portion and an annular portion extending upwardly from said conduit portion, a passageway extending through said conduit portion for the conveyance of fluid through said conduit portion, a valve seat positioned in the passageway and secured to the conduit portion surrounding the passageway, a valve member positioned in the conduit portion and actuating means supported by said body annular portion and connected to said valve member for moving the valve member between an open position permitting fluid flow through said passageway and a closed position to interrupt fluid flow through said passageway, characterized in that the valve seat includes a metallic sleeve member having an outer peripheral edge provided with a plurality of grooves which extend around the metallic sleeve member on said outer peripheral edge, a resilient, expandable annular seat member being positioned in each of said grooves and each seat member securely gripping said metallic sleeve member, said valve body plastics material being moulded in surrounding relation with said seal members to embed said seal members in said plastics material to form a fluid tight seal between said metallic sleeve member and said valve body conduit portion, an annular resilient sleeve insert being secured to said metallic sleeve member and positioned within said passageway, said valve member comprising a valve disc centrally positioned in said conduit portion and connected to the actuating means for movement into and out of sealing engagement with said annular resilient sleeve insert to effect closing and opening of the valve assembly.

A valve stem rotatably supports the valve disc in the conduit portion. The valve stem includes an upper end portion moulded within the actuator device, which is preferably fabricated of plastics material. Adhesive is injected into longitudinal grooves provided in the valve disc to serve as a secondary means of connecting the valve disc to the valve stem. This arrangement also increases the strength of the connection of the valve disc to the valve stem. O-ring seals surround the upper portion of the valve stem in the valve body annular portion.

The O-rings are separated by rigid spacers and are held in place around the valve stem by a retaining ring which is positioned at the upper end of the valve stem. The upper end portion of the valve stem has a hexagonal configuration which is operable to prevent ejection of the O-ring seals from the valve assembly in the event that the retaining ring is forced from its operative position.

The upper end of the valve stem is moulded into the actuator device which is provided with a directional arrow for indicating the direction for turning the valve to a selected one of the valve positions. For the open position, the actuator indicator is in line with the direction of flow through the conduit portion and in the closed position the actuator indicator is normal to the direction of flow through the conduit portion. A ball plunger preferably penetrates the actuator and rides on a metal sleevelike support which surrounds the outside of the annular portion of the valve body. The sleeve-like support preferably includes a plurality of radially spaced, longitudinally extending indentations or stops for receiving the ball plunger to retain the disc in either the open or closed position.

The metal sleeve-like support is installed on the valve body annular portion after the valve body is moulded. The metal support is preferably provided with tabs which are embedded into the plastics material of the valve body annular portion. The tabs serve to strengthen the stops on the valve body so as to limit the valve actuator device to 90° operation. The valve body annular portion is also provided with stops that engage the stops of the metal sleeve support.

The metal sleeve support is further operable to distribute the rotational force of the actuator device over the entire surface area of the valve body annular portion. This serves to strengthen the annular portion without requiring excessive amounts of material to be added to this area of the valve body. In the event that the actuator device is over-torqued, the actuator stops fail but the actuator continues to operate to provide 360° operation without failure of the pressure boundary. Thus with this arrangement, the metal sleeve-like support is operable to withstand the torque which will cause actuator stop failure.

An embodiment of the present invention will now be described, by way of an example, with reference to the accompanying drawings, in which:—

Figure 1 is an isometric view of the valve assembly, illustrating a valve actuator mounted on a moulded polyethylene valve body,

Figure 2 is a sectional view of the valve assembly, illustrating a metal sleeve moulded to the valve body with a resilient elastomeric sleeve insert vulcanized to the metal sleeve,

Figure 3 is a sectional view taken along the line III—III of Figure 2, illustrating a plastics valve disc in a closed position abutting the elastomeric sleeve insert,

Figure 4 is a sectional view taken along the line IV—IV of Figure 2, illustrating the valve actuator with a ball plunger penetrating the actuator and riding on a metal sleeve support surrounding the annular portion of the valve body,

Figure 5 is an end view of the valve assembly, illustrating the valve disc in a closed position in the conduit portion of the valve body,

Figure 6 is a plan view of the valve assembly, illustrating a directional arrow for indicating the direction for turning the actuator to open or close the valve,

Figure 7 is an exploded isometric view of the valve actuator and the valve body, illustrating a seal assembly surrounding the upper portion of the valve stem within the annular portion of the valve body, and

Figure 8 is an enlarged fragmentary sectional view of the valve disc in a closed position in the valve body conduit portion, illustrating the connection of the valve disc to the valve stem.

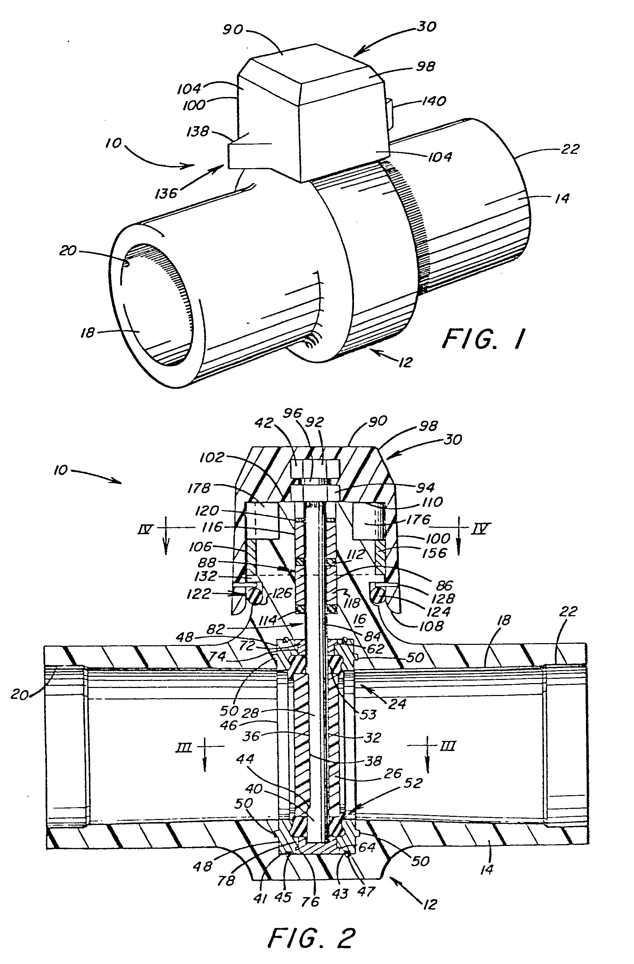

Referring to the drawings and particularly to Figures 1, 2, 5 and 6, there is illustrated a valve assembly generally designated by the numeral 10 of the butterfly-type which is suitable for use as a distribution valve or service stop for controlling a flow of a fluid, either a liquid or a gas, through conduit system. The valve assembly 10 includes a valve body generally designated by a numeral 12 having a conduit portion 14 and an annular portion 16 formed integral with the conduit portion 14 and extending upwardly therefrom. The valve body 12 is fabricated by conventionally known moulding processes of plastics material, such as polyethylene and the like. A passageway 18 extends through the conduit portion 14. The passageway 18 includes opposite end portions 20 and 22 that are suitable for connection to plastics service conduits by directly heat fusing the plastics valve assembly to the conduits whereby the valve assembly is operable to control the flow of fluid, such as natural gas, from one service conduit connected to end portion 20 to another service conduit connected to end portion 22.

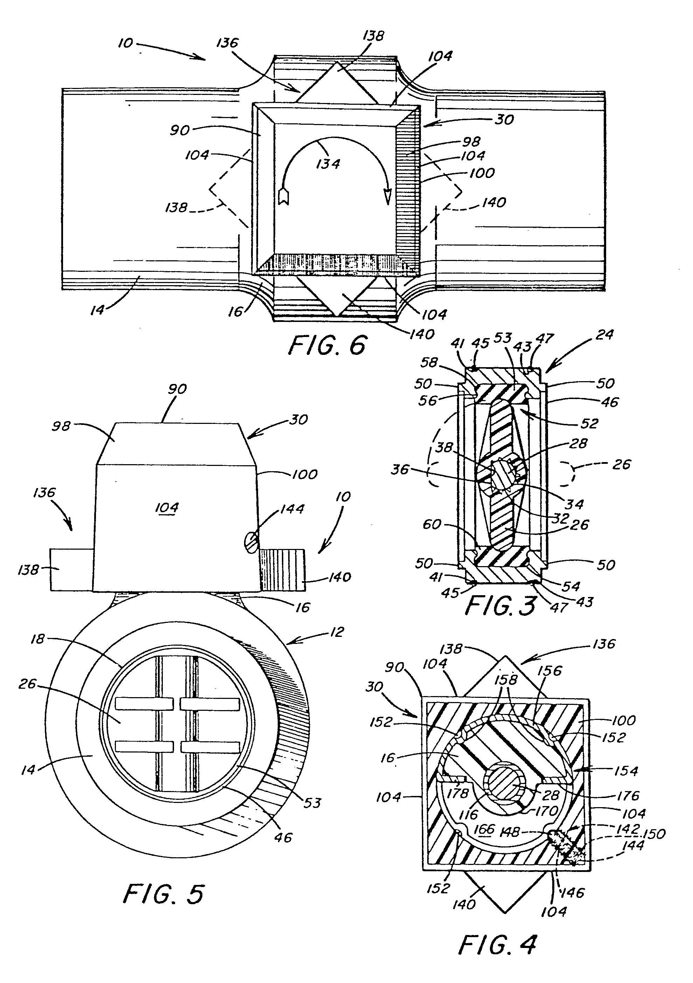

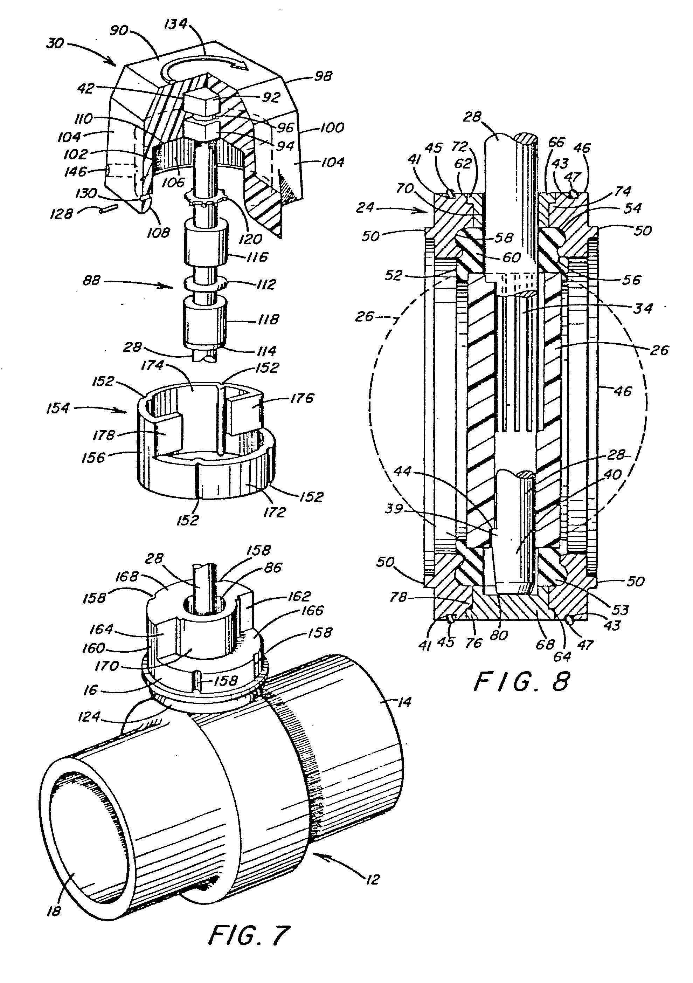

The valve assembly 10 also includes a valve seat assembly generally designated by the numeral 24 in Figure 2 and illustrated in greater detail in Figures 3 and 8. A rotatably mounted butterfly disc 26, also fabricated of plastics material, is connected to a valve stem 28 that is rotated by a valve actuator generally designated by the numeral 30. The valve actuator 30 is operable to move the disc 26 between a closed position, as illustrated by the solid lines in Figure 3, sealingly engaging the seat assembly 24 and an open position, as illustrated by the dotted lines in Figure 3, displaced from sealing engagement with the seat assembly 24. The valve stem 28 is preferably a metallic member and is suitably secured as by moulding the plastics valve actuator 30 to it as will be explained hereinafter in greater detail.

The valve disc 26 is centrally positioned in the conduit portion 14 of the valve body 12. The valve disc 26 has an arcuate configuration and includes a longitudinal bore 32 passing axially through the disc 26. Communicating with the longitudinal bore 32 are a plurality of radially directed longitudinally extending grooves 34 in the disc 26, as illustrated in Figure 3. A portion of the disc bore 32 is provided with a flat 36 extending the length of the bore 32. The valve stem 28 extends through the disc bore 32 and is provided with a flat 38 operable to engage the flat 36 of the disc bore 32.

The valve stem 28 also includes a wedge-shaped lower end portion 40 having a shoulder 39 and a hexagonal-shaped enlarged upper end portion 42. The disc bore 32 at the lower end portion thereof includes a shoulder portion 44. With this arrangement when the valve stem 28 is inserted within the disc bore 32, the shoulder 39 of the wedge-shaped end portion 40 of stem 28 engages the shoulder 44 of the disc 26. The connection, together with the mating engagement of the stem flat 38 with the disc flat 36, ensures that the stem 28 is nonrotatably connected to the disc 26. This arrangement prevents the stem 28 from being forced out of the valve body 12 during service. In addition, suitable adhesive material is injected into the longitudinal grooves 34 of the disc bore 32 surrounding the valve stem 28 to further nonrotatably connect the stem 28 to the valve disc 26.

As illustrated in Figure 2, the seat assembly 24 includes a metallic sleeve member 46 that is arranged to be received within an annular recess 48 of the valve body conduit portion 14. In accordance with the present invention during moulding of the valve body 12, the metallic sleeve member 46 is positioned in the core of the moulds for forming the valve body 12 and polyethylene is injected into the mould core surrounding the metallic sleeve 46. In this manner the metallic sleeve 46 is secured to the valve body 12 during moulding of the valve body 12.

A seal arrangement between the metallic sleeve member 46 and the plastics valve body 12 is also provided, as illustrated in Figures 2, 3 and 8 in accordance with the present invention to prevent leakage between the metallic sleeve member and the plastics valve body. This is accomplished by the provision of a pair of circumferential grooves 41 and 43 on the outer peripheral edge of metallic sleeve 46. The grooves 41 and 43 are equally spaced from the vertical centerline of the metallic sleeve 46. The grooves 41 and 43 are arranged to receive O-rings 45 and 47 respectively. Prior to moulding the plastics valve body 12 around the metallic sleeve 46, the O-rings 45 and 47 are positioned in the circumferential grooves 41 and 43. Preferably, the O-rings 45 and 47 are undersized thereby requiring stretching or expanding of the resilient material forming the O-rings 45 and 47 to position them in the grooves 41 and 43. In this manner the O-rings 41 and 43 are securely positioned in the grooves 41 and 43 to grip the body portion of the metallic sleeve 46.

Thus, during the moulding of the plastics valve body 12, the O-rings 45 and 47 are compressed by the plastics material to securely retain the O-rings in the grooves 41 and 43. This prevents displacement of the O-rings from the grooves as plastics material is injected under elevated pressure into the mould and into surrounding relation with the metallic sleeve 46 and O-rings 45 and 47. By forming the plastics valve body 12 around the metallic sleeve 46 in this manner, the sleeve 46 is moulded to the valve body 12 and the O-rings 45 and 47 are embedded into the plastics valve body 12, as illustrated in Figures 2, 3 and 8. As a result of this seal arrangement, a fluid tight seal is formed between the plastics valve body 12 and the metallic sleeve 46. This enhances the seal between the metallic sleeve 46 and the plastics valve body 12 to prevent fluid from leaking between the sleeve 46 and the valve body 12.

The sleeve member 46 also includes annular protrusions or ribs 50 that extend around the upper and lower end portions of the sleeve member 46. The protrusions 50 serve to lock the polyethylene valve body 12 onto the metallic sleeve member 46 to prevent separation or creeping of the surface of the valve body 12 away from the surface of the metallic sleeve 46. This arrangement is particularly effective to maintain engagement of the metal sleeve 46 with the plastics valve body 12 during sustained periods of fluid flow through the valve assembly 10 at elevated temperatures.

The metal sleeve member 46 serves as a reinforcing member for a resilient valve seat generally designated by the numeral 52 in Figures 2, 3 and 8. Preferably, the valve seat 52 is an elastomeric insert 53 vulcanized within the metal sleeve 46 and is fabricated from a material, such as rubber. Thus, when the valve actuator 30 is rotated to turn the valve disc 26 to the closed position, the valve seat 52 having a limited degree of resilience will be engaged by the outer peripheral surface of the disc 26 to effect a fluid tight seal between the disc 26 and the seat 52 by an interference fit of the disc 26 with the seat 52.

Most preferably, the annular elastomeric insert 53 is vulcanized to the inner diameter of the metallic sleeve member 46 prior to insertion of the metallic sleeve member 46 in the valve body 12 when the valve body 12 is moulded. By vulcanizing the elastomeric insert 53 to the metallic sleeve 46, fluid leakage is prevented between the elastomeric insert 53 and the inner diameter of the metallic sleeve 46. As illustrated in greater detail in Figure 8, the metallic sleeve member 46 is provided with an inner diameter portion 54 having a constricted opening 56 for receiving the rubber insert 53. The insert 53 has an outer diameter 58 that protrudes outwardly from an annular constricted portion 60. The outer diameter portion 58 of the insert 53 is arranged to engage in abutting relation the surface of the inner diameter portion 54 of sleeve member 46. With this arrangement the insert 53 is locked into engagement with the inner diameter portion 54 of the metal sleeve member 46. By locking the elastomeric insert 53 to the metallic sleeve member 46 as above described in addition to vulcanizing the insert 53 to the sleeve member 46, a valve seat 52 is formed that is securely reinforced by the metallic sleeve member 46 to prevent separation and distortion of the valve seat 52 from its annular configuration at elevated pressures.

The metallic sleeve member 46 includes an upper opening 62 and a lower opening 64 through which the valve stem 28 extends. Positioned within the openings 62 and 64 surrounding the valve stem 28 are a pair of bushings 66 and 68. Preferably, the bushings 66 and 68 are fabricated of silicone bronze. The bushing 66 is provided with a bore 70 that extends entirely through the bushing 66. An external shoulder 72 on the bushing 66 is arranged to engage an internal shoulder 74 of the metallic sleeve member 46 to thereby secure the bushing 66 in place within the valve body 12.

The valve stem 28 extends through the bore 70 of the bushing 66 and is rotatable relative thereto. The bushing 68 at the opposite end of the sleeve member 46 is provided with an outer shoulder 76 arranged to securely engage an internal shoulder 78 of the sleeve member 46. The bushing 68 includes a recess 80 which is arranged to rotatably support the valve stem wedge-shaped end portion 40.

The valve stem 28 is preferably fabricated of stainless steel and as above discussed extends through the valve body annular portion 16 and the butterfly disc 26 and is rotatably supported by the seat assembly 24. To receive the valve stem 28, the annular portion 16 is provided with a bore generally designated by the numeral 82 as illustrated in Figure 2. The bore 82 includes a reduced diameter portion 84 and an enlarged diameter portion 86. The reduced diameter portion 84 is positioned in abutting relation with the valve stem 28. A seal assembly generally designated by the numeral 88 is positioned between the valve body annular portion 16 and the valve stem 28 to provide a fluid and pressure tight seal therebetween.

As above discussed, the enlarged upper end portion 42 of the valve stem 28 is secured by moulding to the valve actuator 30. The valve actuator 30 as illustrated in Figures 1, 2, 4, 5, 6 and 7 includes a cap 90 preferably fabricated of plastics material. To effect a secure engagement of the valve stem enlarged end portion 42 to the cap 90, the end portion 42 is formed by a pair of hexagonal sections 92 and 94 which are separated from one another by a connecting portion 96 of a reduced diameter. The hexagonal sections 92 and 94 are moulded to the polyethylene cap during fabrication of the cap 90 prior to insertion of the valve stem 28 in the valve body 12. This secures the valve stem 28 to the cap 90.

The cap 90 has a tapered end portion 98 that extends upwardly from a cup-shaped body portion 100 having a recess 102 that is positioned in surrounding relation with the valve body annular portion 16. The body portion 100, as illustrated in Figures 1, 6 and 7, includes a plurality of planar faces 104 positioned oppositely of the annular inner surface 106 that surrounds the valve body annular portion 16 in spaced relation thereto. The cap 90 has an open end portion 108, as illustrated in Figures 2 and 7 to receive the annular portion 16 and a closed end portion 110 to receive the top surface of the annular portion 16. With this arrangement, the cap 90 of the valve actuator 30 is rotatably mounted on the valve body annular portion 16.

Positioned below the enlarged end portion 42 and the valve cap 90 in surrounding relation with the valve stem 28 in the valve body annular portion 16 is the seal assembly 88. The seal assembly 88 includes a pair of elastomeric O-rings 112 and 114 that are positioned within the enlarged diameter portion 86 of the passageway 82 through the annular portion 16. The O-rings 112 and 114 are maintained in spaced relation by a pair of tubular spacers 116 and 118 that are also preferably fabricated of plastics material. The spacers 116 and 118 are each positioned in abutting relation at their inner cylindrical surface with the valve stem 28 and at their outer cylindrical surface with the annular portion 16.

The spacers 116 and 118 are retained in position within the annular portion 16 by an O-ring retainer 120 that is preferably formed of stainless steel. The O-ring retainer 120 includes an outer edge formed of a plurality of prongs which are embedded within the body of the annular portion 16 to thereby secure the retainer 120 to the annular portion 16. Thus with this arrangement, the seal assembly 88 is securely retained in the valve body annular portion 16 in surrounding relation with the valve stem 28 to prevent leakage of fluid upwardly through the annular portion 16 around the valve stem 28. This is particularly important in the event of failure of the valve disc 26 to prevent the escape of fluid from the valve assembly 10 around the upper end of the valve stem 28.

Further, in accordance with the present invention, a weather seal assembly generally designated by the numeral 122 in Figure 2 is provided between the valve actuator 30 and the valve body annular portion 16. The weather seal assembly 122 is formed by an O-ring 124, also illustrated in Figure 7, that is received within an external groove 126 on the valve body annular portion 16 opposite the open end 108 of actuator cap 90. The annular inner surface 106 of the cap 90 is positioned in abutting relation with the O-ring 124 to seal the opening between the open end portion 108 of cap 90 and the valve body annular portion 16.

To serve as a secondary means of retaining the valve actuator cap 90 on the valve body annular portion 16, a plurality of pins 128 are arranged to extend through apertures 130 of the cap 90. The apertures 130 are positioned oppositely of the external groove 26 above the O-ring 124. With this arrangement, the pins 128 extend through the apertures 130 and are wedged into frictional engagement with the O-ring 124 and a shoulder 132 of the valve body annular portion 16 formed above the external groove 126. In the event that the butterfly disc 26 should be destroyed thereby releasing the valve stem 28 from the disc 26, the valve actuator 30 would not be expelled from the valve body 12. Consequently, with this arrangement, the fluid seal provided by the assembly 88 between the annular portion 16 and the valve stem 28 would not be destroyed. This secondary retaining assembly insures that the valve actuator 30 is maintained secured to the valve body 12.

Referring to Figures 4, 6 and 7 there is illustrated in detail the valve actuator 30 that as above discussed is operable to control the position of the valve disc 26 relative to the seat assembly 24. By the rigid connection of the valve stem upper end portion 42 to the actuator cap 90, rotation of the actuator cap 90 turns the valve stem 28 within the bushings 66 and 68 to rotate the disc 26 from the closed position, as indicated by the solid lines in Figure 3. In the closed position the disc 26 sealingly engages the elastomeric sleeve insert 53 that forms the valve seat 52 of the valve assembly 10. In the closed position fluid flow across the boundary of the disc 26 is prevented.

By rotating the actuator cap 90 through an angle of 90°, the valve disc 26 is moved from its interference fit with the insert 53 to the dotted position, as illustrated in Figure 3. In this position the disc 26 is no longer positioned normal to the direction of fluid flow but is in line with the direction of fluid flow to permit fluid to pass through the conduit portion 14 past the valve seat 52. The actuator cap 90 includes a directional arrow 134 as illustrated in Figures 6 and 7 for indicating the direction to turn the cap 90 to move the disc 26 to the closed position. The cap 90 also includes a position indicator device generally designated by the numeral 136 and illustrated in Figures 1, 4, 5 and 6.

The position indicator device 136 preferably includes a pair of protrusions 138 and 140 that extend outwardly from oppositely positioned planar faces 104 of the cap body portion 100. When the valve disc 26 is in the closed position, the protrusions 138 and 140 are normal to the direction of flow through the conduit portion 14, as illustrated by the solid lines in Figure 6. Accordingly, when the valve disc 28 is in the open position, the protrusions 138 and 140 are in line with the direction of fluid flow through the conduit portion 14, as indicated by the dotted lines in Figure 6.

Referring to Figure 4, there is illustrated the arrangement for maintaining the valve disc 26 in either the open or closed position by locking the position of the actuator cap 90 on the valve body annular portion 16. This is provided by a spring actuated device generally designated by the numeral 142 which includes a ball-type plunger 144 that extends through an aperture 146 of the actuator cap 90 as illustrated in Figure 4. A ball 148 is positioned on the end of plunger 144 and is spring biased outwardly from the plunger 144 by a compression spring 150.

The ball 148 is arranged to be received within one of a plurality of longitudinally extending grooves or recesses 152 circumferentially spaced on the outer periphery of an annular support member generally designated by the numeral 154 in Figures 4 and 7. The support member 154 is preferably a rigid metallic sleeve-like member 156 which surrounds the outer surface of the valve body annular portion 16. The annular portion 16 has a plurality of longitudinally extending grooves 158 that are arranged to receive the grooves or recesses 152 of the metal sleeve 156 so as to securely and nonrotatably engage the annular support member 154 to the valve body annular portion 16.

Further, as illustrated in Figure 7, the annular portion 16 has an upper end portion 160 having vertical planar faces 162 and 164 seaparating horizontal planar faces 166 and 168. Separating the planar vertical surfaces 162 and 164 is an arcuate portion 170 which surrounds the portion of the valve stem 28 that extends through the bore 82 of the annular portion 16. With this configuration of the annular portion upper end 160, the metal sleeve 156 is provided with a lower annular portion 172 separated from an upper semiannular portion 174 by a pair of tabs 176 and 178 that extend diametrically from the semiannular portion 174 and are spaced from one another.

The tabs 176 and 178 are arranged in abutting relation with the faces 162 and 164 and secured thereto to thereby lock the metal sleeve 156 to the annular portion 16. With this arrangement the annular portion 172 of sleeve 156 surrounds the lower portion of valve body annular portion 16 and the semiannular portion 174 of the sleeve 156 surrounds the upper end portion 160 of annular portion 16. The recesses or indentations 152 of the metal sleeve 156 are engaged with the longitudinally extending grooves 158 of the annular portion 16. The ball plunger 144, as illustrated in Figure 4, is urged by the spring 150 into the metal sleeve recesses 152.

The recesses 152 of metal sleeve 156 and the grooves 158 of the annular portion 16 serve as an actuator stop mechanism for rotational movement of the actuator cap 90 on the valve body annular portion 16. Preferably the interlocking pairs of recesses 152 and grooves 158 are spaced 90° apart. This permits operation of the valve actuator 30 to be limited to 90° for moving the valve disc 26 between the open and closed positions. However, in the event the valve actuator 30 is over-torqued, and the above described actuator stop mechanism should fail, the valve actuator 30 is operable to provide 360° operation of the valve assembly 10 and continue to permit rotation of the valve stem 28 and valve disc 26 by the valve actuator cap 30. This feature of the present invention permits continued operation of the valve assembly 10 without a failure of the boundary pressure.

Further in accordance with the present invention, the metal annular support member 154 is operable to withstand the torque which would normally result in failure of the actuator stop mechanism. In addition, the provision of the metal sleeve 156 serves to reinforce the valve body annular portion 16. This is particularly advantageous for the valve assembly 10 of the present invention which is fabricated of plastics material. Ordinarily, to strengthen the plastics annular portion 16, the annular portion 16 would have to be substantially enlarged to withstand the torque applied thereto by the valve actuator 30. However, with the provision of the metal sleeve 156 having the tabs 176 and 178 secured to the polyethylene annular portion 16, the rotational forces generated by turning the valve actuator 30 are distributed along the entire length of the metal sleeve 156. This provides the valve assembly 10 with the necessary strength for sustained operation without having to construct a valve assembly having a substantially enlarged valve body annular portion.

**Claims**

1. A valve assembly comprising, a valve body (12) formed of plastics material, said valve body (12) having a conduit portion (14) and an annular portion (16) extending upwardly from said conduit portion (14), a passageway (18) extending through said conduit portion (14) for the conveyance of fluid through said conduit portion (14), a valve seat (24) positioned in the passageway (18) and secured to the conduit portion (14) surrounding the passageway (18), a valve member (26) positioned in the conduit portion (14) and actuating means (30) supported by said body annular portion (16) and connected to said valve member (26) for moving the valve member (26) between an open position permitting fluid flow through said passageway (18) and a closed position to interrupt fluid flow through said passageway (18), characterized in that the valve seat (24) includes a metallic sleeve member (46) having an outer peripheral edge provided with a plurality of grooves (41, 43) which extend around the metallic sleeve member (46) on said outer peripheral edge, a resilient, expandable annular seal member (45, 47) being positioned in each of said grooves (41, 43) and each seal member (45, 47) securely gripping said metallic sleeve member (46), said valve body plastics material being moulded in surrounding relation with said seal members (45, 47) to embed said seal members (45, 47) in said plastics material to form a fluid tight seal between said metallic sleeve member (46) and said valve body conduit portion (14), an annular resilient sleeve insert (53) being secured to said metallic sleeve member (46) and positioned within said passageway, said valve member comprising a valve disc (26) centrally positioned in said conduit portion (14) and connected to the actuating means (30) for movement into and out of sealing engagement with said annular resilient sleeve insert (53) to effect closing and opening of the valve assembly.

2. A valve assembly as claimed in claim 1, further characterized in that said metallic sleeve member (46) has an inner diameter portion with a constricted annular opening (54) thereto, said annular resilient sleeve insert (53) being fabricated of an elastomeric material and having an outer diameter portion, said sleeve insert outer diameter portion (58) being positioned within said sleeve member constricted annular opening (54), and said sleeve insert outer diameter portion being vulcanized to said sleeve member inner diameter portion to prevent separation of said resilient sleeve insert (53) from the annular opening.

3. A valve assembly as claimed in claim 1 or claim 2, further characterized in that said annular resilient sleeve insert (53) is vulcanized to said metallic sleeve member (46), and said metallic sleeve member (46) with said annular resilient sleeve insert (53) vulcanized thereto is secured to said valve body (12) within said conduit portion (14) by moulding of said valve body (12) in surrounding relation with said metallic sleeve member (46).

4. A valve assembly as claimed in any preceding claim, further characterized in that means are provided for locking said metallic sleeve member (46) to said plastics valve body (12) to prevent separation of said metallic sleeve member (46) from said plastics valve body (12) during sustained fluid pressure in said passageway (18), said means for locking said metallic sleeve member (46) to said plastics valve body (12) including annular protrusions (50) extending outwardly from said metallic sleeve member (46), said annular protrusions (50) being embedded in locking engagement with said plastics material of said valve body (12) to prevent separation of the surface of said valve body away from the surface of said metallic sleeve member and maintain engagement of said metallic sleeve member (46) with said plastics valve body (12) during sustained periods of fluid flow through said passageway (18) at elevated pressures.

5. A valve assembly as claimed in any preceding claim, further characterized in that a valve stem (28) is rotatably supported by said valve body annular portion (16), said valve stem (28) having an upper end portion nonrotatably connected to said actuating means (30) and a lower end portion (40), said valve disc (26) having a bore for receiving said valve stem (28), said valve stem lower end portion (40) extending into said valve disc bore, said valve stem lower end portion (40) being wedge shaped and said valve disc bore having a shoulder portion (44), and said valve stem wedge shaped lower end portion (40) being engaged to said disc shoulder (44) to nonrotatably connect said valve disc (26) to said valve stem (28) and prevent withdrawal of said valve stem (28) from said valve disc bore.

6. A valve assembly as claimed in any of claims 1 to 4, further characterized in that a valve stem (28) extends through said valve body annular portion (16), said metallic sleeve member (46), said annular resilient sleeve insert (53), and into said valve disc (26), said valve stem (28) being nonrotatably connected to said actuator means (30) and said valve disc (26), a pair of aligned bushings (66, 68) nonrotatably positioned within said metallic sleeve member (46) and abutting said annular resilient sleeve insert (53), said metallic sleeve member (46) being arranged to support said pair of bushings (66, 68) in axial alignment with one another, and said pair of bushings (66, 68) being arranged to receive said valve stem (28) to rotatably support said valve stem (28) relative to said annular resilient sleeve insert (53).

7. A valve assembly as claimed in any of claims 1 to 4, further characterized in that a valve stem (28) extends through said valve body annular portion (16), said valve stem having a first end portion nonrotatably connected to said valve disc (26) and a second end portion projecting from said valve body annular portion (16), said valve stem second end portion having an enlarged section (42) and a reduced section (96), said actuating means (30) being moulded to said enlarged and reduced sections (42, 96) to form an integral valve stem and actuating means, and said actuating means (30) being fabricated of plastics material and nonrotatably connected to said valve stem second end portion by moulded engagement with said enlarged and reduced sections (42, 96) for rotational movement of said integral valve stem (28) and actuating means (30) relative to said valve body annular portion (16).

8. A valve assembly as claimed in any preceding claim, further characterized in that a metal support sleeve (154) is positioned in surrounding relation with said valve body annular portion (16) to reinforce said valve body annular portion (16), interlocking means (152) on said metal support sleeve and said valve body annular portion (16) for nonrotatably connecting said metal support sleeve (154) to said valve body annular portion (16), said valve body annular portion (16) having at least one vertical planar surface (162, 164), and said metal support sleeve (154) having a tab (176, 178) embedded in said plastics material of said valve body annular portion (16) and abutting said vertical planar surface (162, 164) to permit the rotational forces generated upon turning of said actuating means (30) to be transmitted from said valve body annular portion (16) to said metal support sleeve (154).

9. A valve assembly as claimed in any preceding claim, further characterized in that said actuator means (30) has a cup-shaped body portion positioned in surrounding relation with said valve body annular portion (16), said valve body annular portion (16) having a groove (126) extending around the external surface of said valve body annular portion (16) to form a shoulder above said groove, an O-ring member (124) securely retained in said groove (126) and positioned in abutting relation with said actuating means body portion to provide a fluid tight seal between said actuating means (30) and said valve body annular portion (16), a pin member (128) extending through said actuating means body portion and into said groove (126) between said valve body annular portion and said O-ring (124), and said pin member (128) being wedged into frictional engagement with said shoulder and said O-ring (124) to securely retain said actuating means (30) on said valve body annular portion (16).

10. A valve assembly as claimed in any preceding claim, further characterized in that said resilient, expandable annular seal member (45, 47) is positioned in each of said grooves (41, 43) in an expanded state to securely grip said metallic sleeve member (46).

11. A valve assembly as claimed in any preceding claim, further characterized in that said seal members (45, 47) are compressed onto said metallic sleeve member (46) by said valve body conduit portion (14) upon moulding of the plastics material around said metallic sleeve member (46) to prevent fluid leakage between said metallic sleeve member (46) and said valve body conduit portion (14).

12. A valve assembly as claimed in any of claims 1 to 7, further characterized in that a metal support sleeve (154) is positioned in surrounding relation with said valve body annular portion (16) to reinforce said valve body annular portion (16), said actuating means (30) being rotatably positioned on said metal support sleeve (154), said metal support sleeve (154) having a plurality of recesses (152) circumferentially spaced from one another, and a spring actuated device (142) retained in said actuating means (30) and normally biased to engage one of said plurality of metal support sleeve recesses (152) to maintain said actuating means (30) in a preselected position corresponding to a preselected position of said valve disc (26) in said conduit portion (16).

**Revendications**

1. Vanne comportant un corps de vanne (12) constitué en matière plastique, ledit corps de vanne (12) possédant une partie conduit (14) et une partie annulaire (16) s'étendant vers le haut à partir de ladite partie conduit (14), un passage (18) traversant ladite partie conduit (14) pour véhiculer un fluide à travers cette dernière, un siège de vanne (24) disposé dans le passage (18) et fixé à la partie conduit (14) entourant le passage (18), un élément de vanne (26) disposé dans la partie conduit (14) et actionnant des moyens (30) portés par ladite partie annulaire (16) du corps et raccordés audit élément de vanne (26) pour déplacer l'élément de vanne (26) entre une position ouverte permettant l'écoulement du fluide à travers ledit passage (18) et une position fermée destinée à interrompre l'écoulement du fluide à travers le passage (18), caractérisée en ce que le siège de vanne (24) comporte un manchon métallique (46) possédant un bord périphérique extérieur muni de plusieurs gorges (41, 43) s'étendant autour du manchon métallique (46) sur ledit bord périphérique extérieur, un organe d'étanchéité annulaire élastique dilatable (45, 47) étant placé dans chacune desdites gorges (41, 43) et chaque organe d'étanchéité (45, 47) enserrant fermement ledit manchon métallique (46), ladite matière plastique du corps de vanne étant moulée en entourant lesdits organes d'étanchéité (45, 47) de manière à enrober lesdits organes (45, 47) dans ladite matière plastique afin d'établir une étanchéité aux fluides entre ledit manchon métallique (46) et la partie conduit (14) du corps de vanne, un insert annulaire élastique (53) du manchon étant fixé audit manchon métallique (46) positionné à l'intérieur dudit passage, tandis que ledit élément de vanne comporte un disque (26) disposé en position centrale dans la partie formant conduit (14) et reccordé aux moyens d'actionnement (30) pour mouvement en et hors engagement étanche avec ledit insert élastique annulaire (53) du manchon pour effectuer la fermeture et l'ouverture de la vanne.

2. Vanne selon la revendication 1, caractérisée en outre en ce que ledit manchon métallique (46) possède une partie de diamètre intérieur avec une ouverture annulaire rétrécie (54), ledit insert élastique annulaire (53) du manchon étant constitué en un matériau élastomère et possédant une partie de diamètre extérieur, ladite partie de diamètre extérieur (58) de l'insert du manchon étant disposée à l'intérieur de ladite ouverture annulaire rétrécie (54) du manchon et ladite partie de diamètre extérieur de l'insert du manchon étant vulcanisée à ladite partie de diamètre intérieur du manchon afin d'empêcher une séparation de l'insert élastique (53) du manchon par rapport à l'ouverture annulaire.

3. Vanne selon l'une des revendications 1 ou 2, caractérisée en outre en ce que ledit insert élastique annulaire (53) du manchon est vulcanisé au manchon métallique (46) et que le manchon métallique (46) avec ledit insert élastique annulaire (53) qui y est vulcanisé, est fixé audit corps de vanne (12) dans ladite partie formant conduit (14) par moulage du corps de vanne (12) autour du manchon métallique (46).

4. Vanne selon l'une quelconque des revendications précédentes caractérisée en outre en ce qu'il est prévu des moyens pour bloquer le manchon métallique (46) sur le corps de vanne (12) en matière plastique afin d'empêcher une séparation dudit manchon métallique (56) par rapport audit corps de vanne (12) en matière plastique pendant l'application continue d'une presion de fluide dans le passage (18), ledits moyens servant à bloquer ledit manchon métallique (46) audit corps de vanne (12) en matière plastique incluant des parties saillantes annulaires (50) s'étendant vers l'extérieur à partir du manchon métallique (46), lesdites parties saillantes annulaires (50) étant enrobées en engagement bloquant avec ladite matière plastique dudit corps de vanne (12) de manière à empêcher une séparation de la surface dudit corps de vanne par rapport à la surface dudit manchon métallique et à maintenir le contact dudit manchon métallique (46) avec ledit corps de vanne (12) en matière plastique pendant des périodes continues d'écoulement du fluide à travers le passage (18) à des températures élevées.

5. Vanne selon l'une quelconque des revendications précédentes caractérisée en outre en ce qu'une tige de vanne (28) est portée, avec possibilité de rotation, par ladite partie annulaire (16) du corps de vanne, ladite tige de vanne (28) possédant une partie terminale supérieure reliée sans possibilité de rotation auxdits moyens (30) d'actionnement et une partie terminale inférieure (40), ledit disque de vanne (26) comportant un trou servant à loger la tige de vanne (28), ladite partie terminale inférieure (40) de la tige de vanne s'étandant à l'intérieur du trou du disque de vanne, ladite partie terminale inférieure (40) de la tige de vanne étant conformée en coin et ledit trou du disque de vanne possédant un épaulement (44), et ladite partie terminale inférieure (40) en forme de coin de la tige de vanne engrenant avec ledit épaulement (44) du disque de manière à relier, sand possibilité de rotation, ledit disque de vanne (26) à la tige de vanne (28) et à empêcher une extraction de la tige de vanne (28) hors du trou du disque de vanne.

6. Vanne selon l'une quelconque des revendications 1 à 4, caractérisée en outre en ce qu'une tige de vanne (28) s'étend à travers ladite partie annulaire (16) du corps de vanne, ledit manchon métallique (46) et ledit insert annulaire élastique (53) du manchon et à l'intérieur du disque de vanne (26), ladite tige de vanne (28) étant reliée, sans possibilité de rotation, auxdits moyens (30) d'actionnement et audit disque de vanne (26), un couple de coussinets alignés (66, 68) étant disposés sans possibilité de rotation à l'intérieur du manchon métallique (46) et contractant ledit insert annulaire élastique (53) du manchon, ledit manchon métallique (46) étant agencé de manière à supporter ledit couple de coussinets (66, 68) alignés axialement l'un par rapport à l'autre, et ledit couple de coussinets (66, 68) étant agencés pour recevoir ladite tige de vanne (28) de manière à soutenir cette dernière avec possibilité de rotation par rapport à l'insert annulaire élastique (53) du manchon.

7. Vanne selon l'une quelconque des revendications 1 à 4, caractérisée en outre en ce qu'une tige de vanne (28) s'étend à travers ladite partie annulaire (16) du corps de vanne, ladite tige de vanne possédant une première partie terminale reliée sans possibilité de rotation au disque de vanne (26) et une seconde partie terminale faisant saillie de ladite partie annulaire (16) du corps de vanne, ladite seconde partie terminale de la tige de vanne possédant une section élargie (42) et une section réduite (96), lesdits moyens d'actionnement (30) étant moulés sur lesdites sections élargie et réduite (42, 96) de manière à former une tige de vanne et des moyens d'actionnement, réalisés d'un seul tenant, et lesdits moyens d'actionnement (30) étant fabriqués en matière plastique et reliés sand possibilité de rotation à ladite seconde partie terminale de la tige de vanne au moyen d'un engrènement, obtenu per engagement moulé avec lesdites sections élargie et réduite (42, 96) pour un mouvement de rotation de ladite tige de vanne (28) et des moyens d'actionnement (30), réalisés d'un seul tenant, par rapport à la partie annulaire (16) du corps de vanne.

8. Vanne selon l'une quelconque des revendications précédentes, caractérisée en outre en ce qu'un manchon de support métallique (154) est disposé de manière à entourer la partie annulaire (16) du corps de vanne afin de renforcer cette dernière, des moyens d'emboîtement (152) étant prévus sur ledit manchon de support métallique et sur la partie annulaire (16) du corps de vanne pour relier, sans possibilité de rotation, le manchon de support métallique (154) à la partie annulaire (16) du corps de vanne, ladite partie annulaire (16) du corps de vanne possédant au moins une surface plane verticale (162, 164) et ledit manchon de support métallique (154) comportant une languette (176, 178) enrobée dans ladite matière plastique de la partie annulaire (16) du corps de vanne et contactant la surface plane verticale (162, 164) de manière à permettre la transmission des forces de rotation engendrées lors de la rotation desdits moyens d'actionnement (30) depuis la partie annulaire (16) du corps de vanne au manchon de support métallique (154).

9. Vanne selon l'une quelconque des revendications précédentes, caractérisée en outre en ce que lesdits moyens d'actionnement (30) possèdent un élement de corps en forme de coupelle disposé de manière à entourer ladite partie annulaire (16) du corps de vanne, ladite partie annulaire (16) du corps de vanne possédant une gorge (126) s'étendant sur le pourtour de sa surface extérieure de manière à former un épaulement au-dessus de ladite gorge, un joint torique (124) étant retenu à demeure dans ladite gorge (126) et disposé en contact avec ledit élément de corps des moyens d'actionnement de manière à fournir une étanchéité aux fluides entre desdits moyens d'actionnement (30) et la partie annulaire (16) du corps de vanne, une goupille (128) s'étendant à travers les éléments de corps des moyens d'actionnement et dans la gorge (126) entre ladite partie annulaire du corps de vanne et le joint torique (124), et ladite goupille (128) étant coincée de manière à engrener par frottement avec ledit épaulement et ledit joint torique (124) de manière à retenir fermement lesdits moyens d'actionnement (30) sur ladite partie annulaire (16) du corps de vanne.

10. Vanne selon l'une quelconque des revendications précédentes, caractérisée en outre en ce que ledit organe d'étanchéité annulaire élastique dilatable (45, 47) est positionné dans chacune des gorges (41, 43) dans un état dilaté de manière à enserrer fermement ledit manchon métallique (46).

11. Vanne selon l'une quelconque des revendications précédentes, caractérisée en outre en ce que lesdits organes d'étanchéité (45, 47) sont comprimés sur ledit manchon métallique (46) par la partie conduit (14) du corps de vanne lors du moulage de la matière plastique autour dudit manchon métallique (46) de manière à empêcher une fuite de fluide entre le manchon métallique (46) et la partie conduit (14) du corps de vanne.

12. Vanne selon l'une quelconque des revendications 1 à 7, caractérisée en outre en ce qu'un manchon de support métallique (154) est disposé de manière à entourer la partie annulaire (16) du corps de vanne de manière à renforcer cette dernière, lesdits moyens d'actionnement (30) étant disposés avec posibilité de rotation sur ledit manchon de support métallique (154), ledit manchon de support métallique (154) comportant une pluralité de renfoncements (152) espacés circonférentiellement entre eux, et un dispositif (142) actionné par ressort retenu dans lesdits moyens d'actionnement (30) et solicité normalement pour engager l'un de ladite pluralité de renfoncements (152) du manchon de support métallique afin de maintenir lesdits moyens d'actionnement (30) dans une position présélectionnée correspondant à une position présélectionnée dudit disque de vanne (26) dans ladite partie conduit (16).

## Patentansprüche

1. Ventilanordnung mit einem Ventilkörper (12), der aus Kunststoff geformt ist und ein Leitungsteil (14) sowie ein ringförmiges Teil (16) aufweist, welches sich aus dem Leitungsteil (14) nach oben erstreckt, wobei sich ein Durchgang (18) für die Förderung eines Fließmittels durch das Leitungsteil (14) erstreckt, mit einem Ventilsitz (24), der in dem Durchgang (18) angeordnet und am Leitungsteil (14) unter Umfassung des Durchganges (18) befestigt ist, mit einem Ventilteil (26), welches in dem Leitungsteil (14) angeordnet ist, und mit Betätigungseinrichtungen (30), die von dem ringförmigen Teil (16) gehaltert und mit dem Ventilteil (26) verbunden sind zur Bewegung des Ventilteils (26) zwischen einer offenen Stellung zum Durchlassen von Fließmittel durch den Durchgang (18) und einer geschlossenen Stellung zur Unterbrechung des Fließmittelstromes durch den Durchgang (18), dadurch gekennzeichnet, daß der Ventilsitz (24) ein metallisches Hülsenteil (46) aufweist mit einer äußeren Umfangskante, die mit mehreren Nuten (41, 43) versehen ist, die sich rund um das metallische Hülsenteil (46) auf dieser äußeren Umfangskante erstrecken, daß ein federndes, nachgebendes, ringförmiges Abdichtteil (45, 47) in jeder der Nuten (41, 43) angeordnet ist, daß jedes Abdichtteil (45, 47) das metallische Hülsenteil (46) sicher hält, der Kunststoff des Ventilkörpers die Abdichtteile (45, 47) umgebend geformt ist, um die Abdichtteile (45, 47) in dem Kunststoff einzubetten und einen fließmitteldichten Verschluß zwischen dem metallischen Hülsenteil (46) und dem Leitungsteil (14) des Ventilkörpers zu bilden, daß ein ringförmiger, federnder Hülseneinsatz (53) an dem metallischen Hülsenteil (46) befestigt und innerhalb des Durchganges angeordnet ist und daß das Ventilteil eine in dem Leitungsteil (14) zentral angeordnete Ventilscheibe (26) aufweist und mit der Betätigungseinrichtung (30) verbunden ist für eine Bewegung in Abdichteingriff mit dem ringförmigen, federnden Hülseneinsatz (53) und für die Bewegung außer Eingriff mit diesem, um ein Schließen und Öffnen der Ventilanordnung zu bewirken.

2. Ventilanordnung nach Anspruch 1, dadurch gekennzeichnet, daß das metallische Hülsenteil (46) ein inneres Durchmesserteil mit einer eingeeingten ringförmigen Öffnung (54) aufweist, der ringförmige federnde Hülseneinsatz (53) aus elastomerem Material hergestellt ist und ein Außendurchmesserteil aufweist, der äußere Durchmesserteil (58) des Hülseneinsatzes innerhalb der eingeeingten Ringöffnung (54) des Hülsenteils angeordnet ist und daß das äußere Durchmesserteil des Hülseneinsatzes an das innere Durchmesserteil des Hülsenteils vulkanisiert ist, um ein Trennen des federnden Hülseneinsatzes (53) von der ringförmigen Öffnung zu verhindern.

3. Ventilanordnung nach Anspruch 1 oder 2, dadurch gekennzeichnet, daß der ringförmige, federnde Hülseneinsatz (53) an das metallische Hülsenteil (46) vulkanisiert ist und daß dieses metallische Hülsenteil (46) mit dem anvulkanisierten ringförmigen, federnden Hülseneinsatz (53) in dem Leitungsteil (14) am Ventilkörper (12) durch Formen des Ventilkörpers (12) unter Umgreifen des metallischen Hülsenteils (46) befestigt ist.

4. Ventilanordnung nach einem der vorhergehenden Ansprüche, dadurch gekennzeichnet, daß Mittel vorgesehen sind zum Festlegen des metallischen Hülsenteils (46) an dem Kunststoffventilkörper (12), um ein Trennen des metallischen Hülsenteils (46) von dem Kunststoffventilkörper (12) zu verhindern, während Fließmitteldruck in dem Durchgang (18) aufrechterhalten wird, daß die Einrichtung zum Festlegen bzw. Verklinken des metallischen Hülsenteils (46) am Kunststoffventilkörper (12) ringförmige Vorsprünge (50) aufweist, die aus dem metallischen Hülsenteil (46) herausstehen, und daß die ringförmigen Vorsprünge (50) in Blockiereingriff mit dem Kunsstoffmaterial des Ventilkörpers (12) eingebettet sind, um ein Trennen der Oberfläche des Ventilkörpers von de Oberfläche des metallischen Hülsenteils fort zu verhindern und den Eingriff des metallischen Hülsenteils (46) mit dem Kunststoffventilkörper (12) aufrechtzuerhalten, während eine Fließmittelströmung durch den Durchgang (18) bei erhöhten Drücken aufrechterhalten ist.

5. Ventilanordnung nach einem der vorhergehenden Ansprüche, dadurch gekennzeichnet, daß ein Ventilschaft (28) vom Ringteil (16) des Ventilkörpers drehbar gehaltert ist und ein oberes Endteil aufweist, welches undrehbar mit der Betätigungseinrichtung (30) verbunden ist, sowie ein unteres Endteil (40) aufweist, daß die Ventilscheibe (26) eine Bohrung zur Aufnahme des Ventilschaftes (28) aufweist, das untere Endteil (40) des Ventilschaftes in die Ventilscheibenbohrung ragt sowie keilförmig ausgestaltet ist, die Ventilscheibenbohrung ein Schulterteil (44) aufweist und daß das keilförmige untere Endteil (40) des Ventilschaftes mit der Scheibenschulter (44) derart in Eingriff steht, daß die Ventilscheibe (26) undrehbar mit dem Ventilschaft (28) verbunden ist und ein Herausziehen des Ventilschaftes (28) aus der Ventilscheibenbohrung verhindert ist.

6. Ventilanordnung nach einem der Ansprüche 1 bis 4, dadurch gekennzeichnet, daß sich ein Ventilschaft (28) durch das ringförmige Teil (16) des Ventilkörpers, durch das metallische Hülsenteil (46), den ringförmigen, federnden Hülseneinsatz (53) und in die Ventilscheibe (26) hinein erstreckt und undrehbar mit der Betätigungseinrichtung (30) und der Ventilscheibe (26) verbunden ist, daß ein Paar von in Flucht liegenden Büchsen (66, 68) undrehbar innerhalb des matallischen Hülsenteils (46) angeordnet sind und an den ringförmigen, federnden Hülseneinsatz (53) anstoßen, daß das metallische Hülsenteil (46) so angeordnet ist, daß es das Paar von Büchsen (66, 68) in axialer Flucht zueinander haltert, und daß Paar von Büchsen (66, 68) derart angeordnet ist, daß der Ventilschaft (28) zur drehbaren Halterung desselben relativ zu dem ringförmigen, federnden Hülseneinsatz (53) aufgenommen wird.

7. Ventilanordnung nach einem der Ansprüche 1 bis 4, dadurch gekennzeichnet, daß sich ein Ventilschaft (28) durch den ringförmigen Teil (16) des Ventilkörpers erstreckt, ein erstes Endteil undrehbar mit der Ventilscheibe (26) verbunden ist und ein zweites Endteil aufweist, welches aus dem ringförmigen Teil (16) des Ventilkörpers ragt, daß das zweite Endteil des Ventilschaftes einen vergrößerten Abschnitt (42) und einen reduzierten Abschnitt (96) aufweist, die Betätigungseinrichtung (30) an dem vergrößerten und dem verkleinerten Abschnitt (42, 96) angeformt ist, um eine einstückige Ventilschaft- und Betätigungseinrichtung zu formen, und daß die Betätigungseinrichtung (30) aus Kunstoff hergestellt und undrehbar mit dem zweiten Endteil des Ventilschaftes durch geformten Eingriff mit dem vergrößerten und reduzierten Abschnitt (42, 96) verbunden ist, für die Drehbewegung der einstückigen Ventilschaft (28)- und Betätigungseinrichtung (30) relativ zu dem ringförmigen Teil (16) des Ventilkörpers.

8. Ventilanordnung nach einem der vorhergehenden Ansprüche, dadurch gekennzeichnet, daß eine Metallstützhülse (154) den ringförmigen Teil (16) des Ventilkörpers umfassend derart angeordnet ist, daß der ringförmige Teil (16) des Ventilkörpers verstärkt wird, Verblockungseinrichtungen (152) auf der Metallstützhülse und dem ringförmigen Teil (16) des Ventilkörpers angeordnet sind für die undrehbare Verbindung der Metallstützhülse (154) mit dem ringförmigen Teil (16) des Ventilkörpers, der mindestens eine vertikale ebene Oberfläche (162, 164) aufweist, daß die Metallstützhülse (154) eine in dem Kunststoff des ringförmigen Teils (16) des Ventilkörpers eingebettete Lasche (176, 178) aufweist, die gegen die vertikale ebene Oberfläche (162, 164) anstößt, um den Drehkräften, die beim Drehen der Betätigungseinrichtung (30) erzeugt werden, die Möglichkeit zu geben, von dem ringförmigen Teil (16) des Ventilkörpers zu der metallischen Stützhülse (154) übertragen zu werden.

9. Ventilanordnung nach einem der vorhergehenden Ansprüche, dadurch gekennzeichnet, daß die Betätigungseinrichtung (30) ein becherförmiges Körperteil aufweist, welches das ringförmige Teil (16) des Ventilkörpers umfassend angeordnet ist, welches eine Nut (126) aufweist, die sich rund um die äußere Oberfläche des ringförmigen Teils (16) des Ventilkörpers erstreckt, um über der Nut eine Schulter zu bilden, ein O-Ringteil (124) fest in der Nut (126) gehalten und unter Anstoßen an das Körperteil der Betätigungseinrichtung angeordnet ist, um einen fließmitteldichten Verschluß zwischen der Betätigungseinrichtung (30) und dem ringförmigen Teil (16) des Ventilkörpers vorzusehen, daß sich ein Stiftteil (128) durch das Körperteil der Betätigungseinrichtung und in die Nut (126) zwischen dem ringförmigen Teil des Ventilkörpers und dem O-Ring (124) erstreckt, und daß der Stift (128) in Reibeingriff mit der Schulter und dem O-Ring (124) eingekeilt ist, um die Betätigungseinrichtung (30) auf dem ringförmigen Teil (16) des Ventilkörpers sicher zu halten.

10. Ventilanordnung nach einem der vorhergehenden Ansprüche, dadurch gekennzeichnet, daß das federnde, nachgebende, ringförmige Abdichtteil (45, 47) in jeder der Nuten (41, 43) in einem ausgeweiteten Zustand angeordnet ist, um das metallische Hülsenteil (46) sicher zu halten.

11. Ventilanordnung nach einem der vorhergehenden Ansprüche, dadurch gekennzeichnet, daß die Abdichtteile (45, 47) auf das metallische Hülsenteil (46) durch das Leitungsteil (14) des Ventilkörpers nach Formen des Kunststoffs rund um das metallische Hülsenteil (46) zusammengedrückt werden, um Fließmittelleckage zwischen dem metallischen Hülsenteil (46) und dem Leitungsteil (14) des Ventilkörpers zu verhindern.

12. Ventilanordnung nach einem der Ansprüche 1—7, dadurch gekennzeichnet, daß die Metallstützhülse (154) unter Umgreifen des ringförmigen Teils (16) des Ventilkörpers angeordnet ist, um den ringförmigen Teil (16) des Ventilkörpers zu verstärken, daß die Betätigungseinrichtung (30) drehbar auf der Metallstützhülse (154) angeordnet ist, welche eine Mehrzahl von Ausnehmungen (152) aufweist, die am Umfang im Abstand zueinander angeordnet sind, und daß eine von einer Feder betätigte Vorrichtung (142) in der Betätigungseinrichtung (30) gehalten und normalerweise derart vorgespannt ist, daß sie mit einer der Vielzahl der Ausnehmungen (152) der Metallstützhülse in Eingriff tritt, um die Betätigungseinrichtung (30) in einer vorgewählten Stellung zu halten, welche einer vorgewählten Position der Ventilscheibe (26) in dem Leitungsteil (16) entspricht.

FIG. 1

FIG. 2

FIG. 6

FIG. 3

FIG. 5

FIG. 4

FIG. 8

FIG. 7